Europäisches Patentamt

European Patent Office

Office européen des brevets

(19)

(11) Publication number:

**0 068 799**
**A2**

(12) **EUROPEAN PATENT APPLICATION**

(21) Application number: **82303251.1**

(22) Date of filing: **22.06.82**

(51) Int. Cl.³: **C 08 F 10/00, C 08 F 4/64**

(30) Priority: **22.06.81 US 276221**

(43) Date of publication of application: **05.01.83**
**Bulletin 83/1**

(84) Designated Contracting States: **BE DE FR GB IT NL**

(71) Applicant: **Exxon Research and Engineering Company,**
**P.O.Box 390 180 Park Avenue, Florham Park New**
**Jersey 07932 (US)**

(72) Inventor: **Russell, Kathryn Ann, 16119 Barcelona Drive,**
**Griendswood Texas (US)**
Inventor: **White, Richard Pancoast, 1511 Mirror Lake**
**Drive, Seabrook Texas (US)**

(74) Representative: **Northover, Robert Frank et al, ESSO**
**CHEMICAL LIMITED ESSO RESEARCH CENTRE P.O.**
**Box 1, Abingdon Oxfordshire, OX13 6BB (GB)**

(54) **Titanium trichloride catalyst component and the process for the production thereof.**

(57) A titanium trichloride catalyst component containing a minor amount of prepolymerized ethylene and useful in the polymerization of alpha-olefins is produced by reducing titanium tetrachloride with an organoaluminum compound at low temperatures and then treating the resulting reduced solids product with about 1 to 1,000 wt.% ethylene so as to obtain a prepolymerized titanium trichloride reduced solid. The prepolymerized reduced solid can thereafter be activated to a highly active prepolymerized titanium trichloride by treating the prepolymerized reduced solid with a halogenated hydrocarbon and a Lewis base complexing agent or titanium tetrachloride and a Lewis base complexing agent. The prepolymerized reduced solid and the prepolymerized activated titanium trichloride manifests substantially no evidence of friability upon being subjected to mechanical shearing forces. The resulting prepolymerized activated titanium trichloride composition, when employed in combination with an organo-metal compound results in an unexpectedly highly active catalyst obtaining polymers with high heptane insolubles.

## TITANIUM TRICHLORIDE CATALYST COMPONENT AND THE PROCESS FOR THE PRODUCTION THEREOF

This invention relates to a titanium trichloride useful as a Ziegler-type catalyst component. The invention further relates to the method of producing a titanium trichloride catalyst component and a method for polymerizing alpha-olefins such as propylene to highly stereoregular poly-olefins in the presence of the titanium trichloride catalyst component and a cocatalyst such as an organoaluminum compound. More particularly, the invention relates to a highly active, highly crystalline shear resistant titanium trichloride which has been prepolymerized with a small amount of ethylene.

Pretreatment of Ziegler-type catalysts with propylene is known in the art. The pretreatment is generally performed in order to stabilize the catalyst. For example, in British Patent No. 1,300,734 (published December 20, 1972) of Shell International Research Maatschappij N.V., it is taught that by contacting a Ziegler-type catalyst comprising a titanium halide and an organoaluminum compound with a small amount of an alpha-olefin a stabilized catalyst is obtained. By "stabilization", the patent teaches that reduction of catalytic activity during the polymerization reaction does not occur such that the overall activity is maintained at a high level.

In accordance with British Patent No. 1,384,603 of Shell International Research Maatschappij N.V., there is disclosed a titanium halide aluminum trialkyl polymerization catalyst which is stabilized against deteriorating during the polymerization reaction by prepolymerizing the catalyst at a temperature below 62°C prior to its being employed in the conventional polymerization reaction.

In the British Patent No. 1,408,611 (published October 1, 1975) of Shell International Research Maatschappij N.V. there is disclosed the preparation of a titanium trichloride catalyst component which involves reducing titanium tetrachloride to a beta-type titanium trichloride, activating the titanium trichloride to a gamma titanium trichloride and thereafter contacting the same with propene

in order to form a prepolymerized catalyst component.

In U.S. Patent No. 3,404,096 of Lamborn, issued October 1, 1968, there is disclosed a method of pretreating Ziegler-type catalysts with ethylene so as to form a curdy catalyst component which is useful for obtaining friable fine catalyst particles.

In U.S. Patent No. 3,689,597 of Mahlman, issued September 5, 1972, there is disclosed a method of obtaining fine polypropylene particles by polymerizing propylene in the presence of a titanium trichloride catalyst which has been pretreated with alpha-olefins.

Several methods describing the activation of titanium trichloride obtained by low temperature reduction of titanium tetrachloride with an organo-aluminum compound are described in the published patent literature. The activation is generally accomplished by contacting the reduction product of titanium tetrachloride with complexing agents and with various halogenated compounds to obtain a purple titanium trichloride which is useful as a cocatalyst with an organo-metal compound for the polymerization of alpha-olefins.

More particularly, in Japanese Patent Application (OPI) No. 34478/1972, published on November 21, 1972 and corresponding to British Patent No. 1,391,068 there is described a process which comprises treating the reduced solids obtained by low temperature reduction of titanium tetrachloride with an organoaluminum compound with a complexing agent, e.g., an ether, and titanium tetrachloride.

In Japanese Patent Application (OPI) No. 112289/1975, published September 3, 1975, there is described a process wherein the titanium trichloride-containing reduced solids product obtained from the low temperature reduction of titanium tetrachloride in the presence of an organoaluminum compound is treated with a complexing agent, e.g., ethers, and then the resulting brown $TiCl_3$-containing catalyst is treated with carbon tetrachloride.

Additionally, in Japanese Patent Application (OPI) No. 143790/1975, published November 19, 1975, a method is described comprising treating the reduced solids product with a mixture of a complexing agent and carbon tetrachloride.

In Japanese Patent Application (OPI) No. 149897/1976, published December 23, 1976 and corresponding to British Patent No. 1,484,086, there is described a process in which brown titanium trichloride obtained from the reduction of titanium tetrachloride in the presence of an organoaluminum halide and at low temperatures is subjected to heat treatment in the presence of a halogenated aliphatic or aromatic hydrocarbon in order to produce a violet titanium trichloride. It is further disclosed that the brown titanium trichloride obtained from the reduction step may be treated with a complexing agent, including ethers, prior to heat treatment.

In Japanese Patent Application (OPI) No. 227/1977, published January 5, 1977, there is described a process which comprises heat-treating the reduction of titanium tetrachloride with organoaluminum compounds, treating the reduced solid with a complexing agent and then treating the resulting solids with an alkylaluminum dihalide or titanium tetrachloride.

Furthermore, in U.S. Patent No. 3,825,524 there is described a process for the production of titanium trichloride catalyst having a high activity which includes contacting a crude titanium trichloride composition, obtained by reducing titanium tetrachloride with an organoaluminum chloride, with a mixed solvent system composed of (i) a main solvent of aliphatic or aromatic hydrocarbons, aromatic chlorinated hydrocarbons or trichloroethylene, and (ii) an auxiliary solvent, including ethers. The mixed solvent system is employed for the purpose of extracting undesirable components from the reduction product.

In Canadian Patent 1,095,493, Belgian Patent 852,182 and Canadian Patent 1,095,492 there are disclosed processes for the production of titanium trichloride cata-

lyst complexes useful for the polymerization of alpha-olefins in the presence of a cocatalyst such as an organometal compound. The processes comprise reducing titanium tetrachloride with an organoaluminum halide compound at low temperature and thereafter treating at elevated temperatures the resulting reduced solid product with a chlorinated saturated hydrocarbon and in the further presence of a complexing agent such as an ether.

In Japanese Patent Application Publication No. Sho. 52-142691, of Chisso Corp., published November 28, 1977, there is described a method of producing a titanium halide catalyst component wherein a small amount of propylene is present during the preparation of the titanium trichloride obtained during the reduction of titanium tetrachloride with an organoaluminum compound and thereafter treating the obtained reduced solid with a Lewis acid and/or a complexing agent.

In U.S. Patent 4,295,991 issued October 20, 1981 there is disclosed the preparation of a titanium trichloride catalyst component which involves a low temperature reduction of titanium tetrachloride with an organoaluminum compound, treating the resulting reduced solids product with an alpha olefin to obtain a non friable prepolymerized reduced solid which can thereafter be activated with a halogenated hydrocarbon and a Lewis base or TiCl$_4$ and a Lewis base.

In Belgian Patent 887,688, issued August 26, 1981 a procedure is disclosed for producing titanium catalyst by reducing titanium tetrahalide under controlled conditions of temperatures, reduction rate and concentrations to produce a reduced titanium halide reduced solids product seeds having an average particle size diameter of about 20 microns or greater and thereafter simultaneously and without interruption adding to the seeds containing system titanium tetrahalide and organometallic reducing compound at a rate to reduce the titanium tetrahalide to titanium trihalide of about $6 \times 10^{-4}$ to about 0.02 milli-moles per liter per

second per meter$^2$ of available preformed titanium trihalide surface area until a solids product of desired size is obtained.

It is well known that solid linear polymers of ethylene can be prepared at relatively low pressures and temperatures by contacting ethylene with a suitable "Ziegler" catalyst (for example, French Patent No. 2,022,414 and U.S. Pat. No. 3,309,350). Generally speaking, such Ziegler catalysts are formed by combining under an inert atmosphere an organic compound of a Group I-III light metal and a reducible salt of a Group IV-VI transition metal. So formed, they are either soluble (homogeneous) or insoluble (heterogeneous) in hydrocarbons at room temperature. Heterogeneous Ziegler catalysts can be prepared either by reduction of a transition metal salt, in its highest valence state, with an organo-metallic compound, or by direct reduction of a preformed transition metal salt, in a lower valence state, with an organometallic compound. A commercially successful catalyst of the latter type is the preformed titanium trichloride solid cocatalyzed by diethylaluminum chloride.

It is well known that during the formation of polyolefin particles obtained in the presence of transition metal halide catalysts, such as titanium halides, the polymer particles are essentially replicates of the catalyst particles. It is further known that during the activation of the titanium halides obtained from the low temperature reduction of titanium tetrachloride that the transition metal halide particles are friable, i.e., they will shear into smaller particles, i.e., fines. Therefore, it is highly desirable to obtain transition metal halide catalyst components which are essentially non-friable during activation and when subjected to mechanical shearing forces which may occur either during activation and polymerization.

In accordance with the present invention, a non-friable, highly active Ziegler-type titanium chloride catalyst composition is obtained by reducing solid product in the presence of an organoaluminum compound at low temperature, e.g., in the range of about -50°C to about 30°C, contacting the titanium trichloride reduced solid product with an amount of ethylene under polymerization conditions to obtain a titanium trichloride reduced solid product containing about 1 to about 1,000 wt% of prepolymerized ethylene based on the weight of titanium trichloride thereby providing prepolymerized $TiCl_3$ reduced solid, and thereafter treating said prepolymerized titanium trichloride reduced solid product with one of (a) a chlorinated hydrocarbon having at least two carbon atoms and a Lewis base complexing agent or with (b) a Lewis acid such as $TiCl_4$ and a Lewis base complexing agent to convert said prepolymerized titanium trichloride reduced solid to a highly active, crystalline prepolymerized titanium trichloride composition. The process of prepolymerizing the titanium trichloride reduced solid product obtained from the low temperature reduction of titanium tetrachloride in the presence of an alkylaluminum compound results in titanium trichloride catalyst particles which are substantially resistant to fractionation, i.e., are non-friable, and therefore, can be readily converted to a purple form of titanium trichloride absent the production of "fines" by treatment of the prepolymerized titanium trichloride reduced solid with the halogenated hydrocarbon and Lewis base or by other methods of activation. The strengthening of the titanium trichloride reduced solid, therefore, allows for a wider range of activation conditions, as well as use of variety of solvents and activators which would normally disintegrate titanium trichloride particles. In other words, the prepolymerization of the titanium trichloride reduced solid product (the contacting of the reduced solid under polymerization conditions with a minor amount of an ethylene) allows the reduction product to be activated under extreme conditions which heretofore would normally lead to catalyst attrition.

The titanium trichloride-containing reduced solid used in the present invention is obtained by reducing titanium tetrachloride with an organoaluminum compound and preferably an alkylaluminum halide at low temperature (e.g., -50°C to +30°C) as described in Canadian Patent 1,095,493. The alkylaluminum halide employed can be represented by the general formula $R_nAlX_{3-n}$, wherein R represents an alkyl group having 1 to 18 carbon atoms, most preferably 2 to 6 carbon atoms, X represents a halogen atom, most preferably chloride, and n can be within the range of 0 to 3 and preferably 1 to 3, or a mixture or complex compound thereof. Illustrative of suitable alkylaluminum compounds are trialkylaluminums, dialkylaluminum halides, monoalkylaluminum dihalides and alkylaluminum sesquihalides, mixtures or complex compounds thereof. Examples of trialkylaluminums which can be employed are trimethylaluminum triethylaluminum and tributylaluminum and the like. Examples of dialkylaluminum halides are dimethylaluminum chloride, diethylaluminum chloride, dibutylaluminum chloride, diethylaluminum bromide and diethylaluminum iodide and the like. Examples of the monoalkylaluminum dihalides are are methylaluminum dichloride, ethylaluminum dichloride, butylaluminum dichloride, ethylaluminum dibromide and ethylaluminum diiodide and the like. Examples of the sesquihalides are ethylaluminum sesquichloride, propylaluminum sesquichloride and the like. Triethylaluminum, diethylaluminum chloride, ethylaluminum dichloride, ethylaluminum sesquichloride and mixtures thereof or complex compounds thereof; for example, a mixture of diethylaluminum chloride and ethylaluminum dichloride are particularly preferable.

The reduction step is carried out at a specified temperature which typically is between -50°C and +30°C by contacting titanium tetrachloride with the above-described organoaluminum compound. By way of example, to a solution of titanium tetrachloride in an inert solvent or diluent, e.g., a hydrocarbon having 5 to 12 carbon atoms such as n-pentane, isopentane, cyclopentane, n-hexane or isooctane, there is added dropwise a solution of alkylaluminum halide compound in said inert solvent or diluent. Conversely, a solution of titanium tetrachloride can be added dropwise to a solution of the alkylaluminum halide compound. Under carefully controlled conditions, the quantity of organo-aluminum compound employed is generally about 0.5 to about 5 gram atoms as aluminum per 1 gram atom of titanium.

The specific temperatures and the amount of organoaluminum compound employed during the reduction step can be varied within the ranges disclosed herein; nevertheless associated with a specific organoaluminum compound there can be desirable concentrations and temperature ranges. In the case of diethylaluminum chloride, for example, (which will hereinafter be referred to as "DEAC") it is preferable to carry out the reduction at a temperature of about -50°C to about +30°C, particularly about -5°C to about +5°C, and to use DEAC in a proportion of about 0.5 to about 5 mols, particularly about 0.8 to about 1.5 mols, to 1 mol of titanium tetrachloride. For a mixture or complex of dialkylaluminum halide and alkylaluminum dihalide, for example, DEAC and ethylaluminum dichloride (which will hereinafter be referred to as "EADC"), it is preferable to carry out the reduction at a temperature of about -50°C to about +30°C, particularly about -5°C to about +5°C, and to use DEAC in a proportion of about 0.5 to about 4 mols, particularly about 0.8 to about 1.5 mols, and EADC in a proportion of about 0.01 to about 1.5 mols, particularly about 0.1 to about 1.2 mols, respectively based on 1 mol of titanium tetrachloride.

The period of time of reactant addition during the reduction step may vary greatly, depending upon the quantity of reactants used and the desirability of maintaining a specified reduction temperature. However, reactant addition, e.g., dropwise addition, is generally carried out for a period of time of from about 30 minutes to about 10 hours, preferably from 30 minutes to 3 hours.

Preferably, after reactant addition the reaction mixture is aged in order to complete the reduction reaction. Aging may be carried out by gradually elevating the temperature of the reaction mixture to a specified temperature within the range of about 20°C to about 100°C over a period of time of about 1 to 2 hours. Most preferably, aging is carried out by holding the reaction mixture, after reactant addition, at the reduction temperature for about one-half hour and then gradually elevating the temperature to about 65° for a period of time of about 1 hour and finally holding the reaction mixture at about 65°C for about 1 hour. Caution should be taken during aging to prevent the titanium trichloride reduced solid from being subjected to conversion of the titanium trichloride containing reduced solid to a more crystalline form. For example, by subjecting the titanium trichloride reduced solid to too high a temperature for a prolonged period of time during the aging step crystal conversion could occur.

The reduction can also be out to produce a substantially non-friable, highly active Ziegler-type titanium trichloride catalyst component having a narrow particle size distribution and an average particle size diameter greater than 25 microns, desirably greater than 35 microns and preferably in the range of 40 to 60 microns or greater by adding an organoaluminum reducing compound with stirring to a solution of titanium tetrahalide in a suitable diluent at a temperature of about -50°C to about +10°C and in a mole ratio of between about 1:3 to about 1.2:1 and at a rate such that the reduction of titanium tetrachloride to titanium trichloride is from 0.03 to 0.2 milli-moles per liter per second to obtain titanium trichloride solids product in the diluent having a narrow particle size distribution and an average particle size about or greater than 20 microns; and thereafter continuously and simultaneously adding with stirring to the titanium trichloride solids product in the diluent a Ziegler-type organoaluminum compound and titanium tetrachloride in a mole ratio of about 1:3 to about 1.2:1, the simultaneous addition being made at a rate such that the reduction of titanium tetrachloride to titanium trichloride is $6 \times 10^{-4}$ to $7 \times 10^{-3}$, preferably about $2.5 \times 10^{-3}$.

millimoles per liter per second per $m^2$ where surface area here and in references to follow refers to that calculated from catalyst diameter, i.e., S.A. = $\pi$ (Diameter catalyst)$^2$ (and does not include any internal voids) of available preformed titanium trichloride surface area until solids product of desired size is obtained and thereafter recovering the titanium trichloride solids product.

The titanium trichloride solids product of narrow particle size range is obtained in accordance with a two step process. In accordance with the first step, titanium tetrachloride is precipitated in a manner so as to form titanium trihalide seeds having an average particle size diameter of about 20 microns or greater and having a narrow particle size distribution. In the second step, which preferably follows the first step without interruption, titanium tetrahalide and an organoaluminum reducing compound are added continuously and simultaneously at a rate such that the titanium trichloride produced deposits and grows upon the seed formed in the first step. The addition of the titanium tetrachloride and the organoaluminum reducing compound is controlled in a manner such that one can grow transition metals solids product as large as desired and preferably 35 microns or greater. The Ziegler-type organoaluminum reducing compounds are described above.

Preferably the organoaluminum reducing compounds will be an aluminum alkyl compound such as $AlR_3$, $R_2AlX$, $RAlX_2$, $R_3Al_2X_3$, wherein R and X are as above. R can have from 1 to 10 carbon atoms and desirably is an alkyl or aryl group and preferably having from 1 to 6 carbon atoms. Most desirably R is ethyl and X is chlorine. Most preferably the organoaluminum compound employed in this invention is diethyl aluminum chloride and in the first step a certain amount of ethyl aluminum dichloride.

In a preferred aspect of this method of reduction to obtain larger reduced solids are obtained by adding diethylaluminum chloride to a solution of titanium tetrachloride in a suitable diluent and preferably in the presence of particular amounts of added ethylaluminum dichloride. Preferable the ethylaluminum dichloride is premixed with the titanium tetrachloride prior to the addition of the diethylaluminum chloride, however, in the alternative all the added ethylaluminum dichloride can be added with the diethyl aluminum chloride or some added diethyl aluminum chloride can be premixed with the titanium tetrachloride solution prior to the addition of the diethylaluminum chloride, the remainder of the ethylaluminum dichloride being added with the diethylaluminum chloride.

In accordance with a preferred aspect, the growth step is continued without interruption after the formation of the seeds, however, the seeds can be if desired separated and washed prior to the growing of additional titanium trichloride onto the seeds to produce the large particle size solids product.

The mole ratio of organoaluminum compound, i.e., total of diethylaluminum chloride and ethylaluminum dichloride to titanium tetrachloride employed in the seed forming step can be between about 0.1:1.0 to about 1.2:1.0, and desirably about 1.0:1.0 to about 1.2:1.0 and most preferably in a mole ratio of about 1:1.

The moles of added ethylaluminum dichloride per mole of diethylaluminum chloride can be from 0 to about 1.0. Preferably, the mole ratio of the dichloride to monochloride will be about 0.0:1.0 to about 1.0:1.0 and most preferably about 0.1:1.

As stated above, all the added ethylaluminum dichloride can be added together with the diethylaluminum chloride. It is, however, desirable that some added ethylaluminum dichloride be present with the titanium tetrachloride prior to the addition of the diethylaluminum chloride. Alternatively to employing added dichloride since ethylaluminum dichloride is produced in a solution as a result of the reduction of titanium tetrachloride with the diethylaluminum chloride the deliberate addition of ethyl aluminum dichloride can be eliminated.

During the growth step, it is desirable that the diethylaluminum chloride and titanium trichloride be added in a mol ratio of about 0.9:1.0 to about 1.2:1.0 and desirably about 0.9:1.0 to about 1.1:1.0 and most preferably the mole ratio of diethylaluminum chloride to titanium tetrachloride will be about 1:1.

As indicated above, it is highly desirable that added ethylaluminum dichloride be present in the seed growing step at a mole ratio of ethylaluminum dichloride to diethylaluminum dichloride of from about 0.0:1.1 to about 1.0:1.0. Preferably the added ethylaluminum dichloride will be premixed with the titanium tetrachloride in amounts such that about 1.0 to about 0.3 moles of added ethylaluminum dichloride will be present in the solution per mole of diethyl aluminum chloride to be added prior to the addition of diethylaluminum chloride. Most desirably, about 0.14 to about 0.2 moles of added ethylaluminum dichloride per mole of diethyl aluminum chloride to be added can be in the solution prior to the addition of diethylaluminum chloride. However, in the alternative, all the ethylaluminum dichloride can be added with the diethylaluminum chloride to the titanium tetrahalide solution during the seed growing stage.

It is important that the rate of reduction during the seed growing step be carefully controlled so as to prevent the production of new titanium trichloride nuclei. The organoaluminum compound should be added at a rate such that the reduction of titanium tetrahalide to titanium trihalide is about 0.03 to about 0.2 millimoles per liter per second, and preferably 0.08 millimoles per liter per second.

During the seed growing step, the desired temperature of the system is a function of the particular organoaluminum reducing compound employed. For example, should aluminum triethyl be employed for reducing the titanium tetrachloride to titanium trichloride it is desirable that the system be maintained at a temperature of about -50°C. The temperature therefore can be in the range of about -50°C to about +10°C and where during the seed growth steps diethylaluminum chloride is employed for the reduction of titanium tetrachloride, the temperature should be about -5 to about +10°C and preferably about 0°C.

In accordance with the preferred aspects, titanium tetrachloride and diethylaluminum chloride are simultaneously and continuously added to the titanium trichloride solid product obtained in the seed growing step at the rate such that the reduction of titanium tetrachloride to titanium trichloride is about $6 \times 10^{-4}$ to about $7 \times 10^{-3}$ millimoles per liter per second per $m^2$ of available preformed titanium trichloride surface area and most preferably at a rate such that the reduction of titanium tetrachloride to titanium trichloride is about $2.5 \times 10^{-3}$ millimoles per liter per second per $m^2$ of available preformed titanium trichloride surface area.

The growth time can vary between about 10 and 25 hours, however, it has been noted that there is a strong dependence of fines production on the growth times. Essentially no fines generation are observed for growth runs of about 14 hours but for shorter and longer growth runs some fines are produced. The combination of the growth time and reduction rate will naturally determine the rate of addition of reagents such all being determined by the finally desired size of the solids product.

It is also necessary that the mixing and reduction during the seed growing and growth steps be carried out in a reaction vessel, the contents of which are stirred at a rate so as to provide a stirring power which will keep the solids in uniform suspension without causing fracturing of the particles. Typically such stirring power can be 3.0 milliwatts/liter to about 2,600 milliwatts/liter.

The stirring rate appears to be a function of the size as well as the geometry of the vessel in which the reduction and mixing takes place, as well as the shape and size of the stirrer itself. Therefore, for each reaction vessel those of ordinary skill in the art can determine the most desirable stirring rate as well as the size of the

stirrer medium in order to avoid excess production of fines.

The so obtained titanium trichloride reduced solid is an amorphous solid having a complicated composition comprising, as a main component, titanium trichloride and the alkylaluminum compound employed in the reduction, or a reaction product of titanium tetrachloride and the alkylaluminum halide compound. This composition varies depending upon the exact reducing methods and conditions. Where titanium tetrachloride is reduced with a mixture of DEAC and EADC, it comprises, as a main component, titanium trichloride and EADC and, in addition, aluminum compounds in various forms, the proportion of aluminum being about 0.2 gram atoms or more to 1 gram atom of titanium.

The so obtained reduced solid contains titanium trichloride of the beta-type and is brown to red-violet in color, depending upon specific reduction conditions employed.

The titanium trichloride reduced solid obtained as described above can be prepolymerized, i.e., contacted with ethylene under polymerization conditions, directly without the addition of a reducing cocatalyst or it can be separated, washed in an inert solvent or diluent, if desirable, and then prepolymerized.

The temperature of the reaction mixture during the ethylene application can be from about 0°C to 100°C preferably 25°C to about 60°C and most preferably from about 30°C to about 40°C. As in the aging step, prepolymerization conditions should be such as to prevent conversion of the reduced solid to a more crystalline form.

The ethylene employed in accordance with the present invention for the prepolymerization of the titanium trichloride reduced solid can be added directly to the reaction product of the reduction step or it can be added to the washed reaction product in a suitable solvent. The amount of ethylene employed can be in a mol ratio per total titanium halide reduced solid employed in a range of about 0.03 to 3000 times, and particularly at about 0.1 to 0.5 times. The mol ratios employed, therefore, will desirably provide a titanium halide prepolymerized with about 1 to 1,000 wt% of ethylene based on the weight of titanium halide.

The rate of addition of the gaseous ethylene to the reduced solids is extremely important, and the rate is preferably equivalent to or less than the reaction rate of the ethylene. The rate of reaction will vary within the acceptable temperature range and can be easily determined by one of ordinary skill with minimal effort at the selected temperature. Under any given set of reaction conditions, ethylene polymerizes faster than the alpha-olefins, e.g., propylene and thereby improves the overall reaction economics.

Under the same conditions of propylene polymerization using prepolymerized and activated catalysts, prepolymerized with ethylene and propylene respectively the ethylene prepolymerized catalyst preformed better under harsher conditions (the propylene prepolymerized catalysts clumped badly and could not be sieved) and under milder conditions the ethylene prepolymerized catalysts produced polypropylene of higher bulk density.

Upon completion of prepolymerization the titanium trichloride reduced solid now prepolymerized with a minor amount of ethylene is filtered and washed with an inert organic solvent, preferably a hydrocarbon solvent, so as to remove any reaction by-products.

In accordance with this invention, the prepolymerized titanium trichloride reduced solids obtained will manifest essentially no change in crystalline structure.

The prepolymerized reduced solid can be employed as a non-friable polymerization catalyst component.

The prepolymerized titanium trichloride reduced solid product can be activated to a highly active crystalline prepolymerized product in essentially two manners. One can employ a chlorinated hydrocarbon in combination with a Lewis base complexing agent or a Lewis Acid in combination with a Lewis base complexing agent. It is preferable to employ the chlorinated hydrocarbon in combination with the Lewis base complexing agent.

As illustrative of the chlorinated hydrocarbons which can be employed in accordance with this invention are hexachloroethane, pentachloroethane, tetrachloroethane, trichloroethane, dichloroethane, monochloroethane, tetrachloroethylene, trichloroethylene, dichloroethylene, chloroethylene, octachloropropane, hectachloropropane, hexachloropropane, pentachloropropane, tetrachloropropane, trichloropropane, dichloropropane, monochloropropane, tetrachlorobutane, trichlorobutane, dichlorobutane, trichloropentane, dichloropentane, dichlorohexane, dichloroheptane, dichlorooctane, dichlorobenzene, trichlorobenzene, monochlorobenzene, dichloropropene, trichloropropene, and dichlorobutene.

A variety of chlorinated hydrocarbons can be employed during activation, e.g., the chlorinated products of aliphatic and aromatic hydrocarbons. The chlorinated products of the aliphatic saturated hydrocarbons are generally more effective. Desirably the chlorinated aliphatic hydrocarbons will have from about 2 to 8 carbon atoms and from about 2 to 6 chlorine atoms per molecule. The most preferred chlorinated hydrocarbons are the chlorinated ethanes. The effect of the chlorinated hydrocarbons appears to increase with the increased number of chlorine atoms per molecule desired. Desirably, therefore, the chlorinated hydrocarbons employed can be one of hexachloroethane, pentachloroethane, tetrachloroethane, trichloroethane. Most preferably the chlorinated hydrocarbon will be hexachloroethane.

The Lewis base complexing agent which can be employed in accordance with this invention will desirably contain at least one electron donating atom or group in the molecule and will preferably be one of an ether, ester, ketone, thioether, organophosphoric compound or organonitrogen compound or mixtures of these compounds. Most desirably the Lewis base complexing agent will be a dialkyl ether such as, for example, diethyl ether, diisopropyl ether, di-n-butyl ether, diisobutyl ether, diisoamyl ether, di-n-amyl ether, di-n-heptyl ether, di-2-ethylhexyl ether, di-2-ethylheptyl ether, allyl ethyl ether, allyl butyl ether, diphenyl ether, anisole, phenetole, chloroanisole, bromoanisole, dimethyloxy benzene, and the like.

Useful examples of the thioethers are diethyl thioether, di-n-propyl thioether, dicyclohexyl thioether, diphenyl thioether, ditolyl thioether, ethylphenyl thioether, propylphenyl thioether, diallyl thioether, and the like. Useful examples of the organophosphorous compounds which can be employed in accordance with this invention are tri-n-butyl phosphine, triphenyl phosphine, triethyl phosphite, tributyl phosphite, and the like. Useful examples of the organonitrogen compounds are diethyl amine, triethyl amine, n-propyl amine, di-n-propyl amine, tri-n-propyl amine, aniline, dimethylaniline, and the like. As indicated above, the ethers are most preferably employed and above all are dialkyl ethers, preferably the alkyl groups containing from 4 to 8 carbon atoms. Most preferred are di-alkyl ethers containing 4 or 5 carbon atoms. The ethers so employed can be symmetrical or asymmetrical ethers and hence the alkyl groups are selected from the group consisting of n-butyl, isobutyl, n-amyl, isoamyl, n-heptyl , 2-methylbutyl and 2-ethylpropyl. Most preferably di-n-butyl ether, di-n-amyl ether, diiso-amyl ether di-n-heptyl ether, di-2-ethylhexyl ether and n-butyl isoamyl ether are employed in accordance with this invention as a Lewis base complexing agent to be used in combination with the halogenated hydrocarbon.

In accordance with the present invention one may employ a Lewis acid in place of the halogenated hydrocarbon. However, the Lewis acid combination with a Lewis base is less desirable with respect to the results obtained than the halogenated hydrocarbon in combination with a Lewis base. The Lewis acids which can be used are selected from the halides of Group II or Group VII metals and halides of silica or boron. Illustrative of the Lewis acids which can be employed are, for example, $MgCl_2$, $MnCl_4$, $AlCl_3$, $FeCl_3$, $TiCl_4$, $VCl_4$, $VCl_3$, $NiCl_2$, $CoCl_2$, $BCl_3$, $BF_3$, $SiCl_4$. The preferred Lewis acid is $TiCl_4$.

The amount of Lewis acid employed in accordance with this invention can be from about 0.05 to about 50 times that of the weight of the prepolymerized titanium halide and preferably is from about 0.45 to about 15 times.

The proportion of Lewis base complexing agent employed is preferably between 0.1 and 2.5 mols, and especially between 0.5 and 1.8 mols, per mol of $TiCl_3$ present in the reduced solid. About 1 mol Lewis base per mol of $TiCl_3$ present in the reduced solid gives particularly good results.

In accordance with the present invention the activation step, i.e., the conversion of the prepolymerized reduced solid to a highly crystalline form of titanium trichloride is accomplished by contacting the prepolymerized reduced solid with either the chlorinated hydrocarbon and Lewis base complexing agent or the Lewis acid and Lewis base complexing agent. The contacting can be carried out by adding the prepolymerized reduced solid to an inert solvent or diluent, such as previously described so as to prepare a suspension and then adding, for example, the ether and hexachloroethane, thereto in order; by adding the ether to the prepolymerized reduced solid to prepare a suspension and then adding thereto hexachloroethane as a solution of hexachloroethane in the ether or in an inert solvent; or by adding the prepolymerized reduced solid to a mixed solution of ether and hexachloroethane or a mixed solution of ether and hexachloroethane or a mixed solution of ether, hexachloroethane and an inert solvent. The most convenient and favorable method consists in suspending the reduced solid in an inert solvent and then adding a mixture of ether, hexachloroethane and an inert solvent to the suspension.

In accordance with the present invention the chlorinated hydrocarbon such as hexachloroethane and the ether can be in a mol ratio to the titanium halide in the reduced solid of about at least 0.1, mol preferably 0.1 mol to about 2.5 mols of ether and 0.5 to 1.5 mols of hexachloroethane. Greater or lesser ratios can be employed.

However, the most desirable effects are obtained by employing the so stated specific mol ratios.

Moreover, the effects of the present invention are somewhat reduced if the prepolymerized reduced solid is contacted with the hexachloroethane or halogenated hydrocarbon prior to contacting the reduced solid with the ether. The treatment with ether and hexachloroethane appears together to provide a synergistic effect resulting in a catalyst having surprisingly excellent catalytic performances.

In accordance with the present invention the chlorinated hydrocarbon is employed in an amount of about 0.2 mols to about 3.0 mols per gram atom of titanium in the prepolymerized reduced solid and preferably the chlorinated hydrocarbons will be in the range of about 0.5 mols to about 1.5 mols particularly in the range of about 0.6 mols to about 1.2 mols per 1 gram atom of titanium in the prepolymerized reduced solid. Greater amounts of chlorinated hydrocarbon can be employed, however, no benefit is obtained therefrom. Lesser amounts of chlorinated hydrocarbon results in a less active catalyst.

The activation step is carried out at a temperature of about 50°C to about 100°C for a period of time of about 1 to 10 hours. Utilization of temperatures outside these ranges can be employed. However, activity of the catalyst appears to be best when the specified temperatures are employed. Most preferably, activation is carried out with the chlorinated hydrocarbon and ether at a temperature of about 80°C to about 90°C for about 3 to about 7 hours. Upon completion of the activation step the so obtained prepolymerized titanium trichloride catalyst composition is separated from the solvent, washed with an inert solvent or diluent and optionally dried in conventional manner. During the treatment step, the titanium halide of the reduced solid is converted whereby the so obtained titanium trichloride catalyst contains predominantly titanium trichloride of the delta-type, according to the classifications generally adopted (Journal of Polymer Science, 51, 1961, pp. 399-410). The so obtained titanium trichloride catalyst has a violet to purple color.

The titanium trichloride catalyst of the present invention is ordinarily employed as a catalyst for the polymerization of alpha-olefins by contacting the same with an organo-metal compound which is used as a cocatalyst for the Ziegler-type catalyst, for example, monoalkylaluminum dichloride, dialkylaluminum monochloride, aluminum sesquihalide or trialkylaluminum. One may also employ various compounds, for example, complexing agents such as ethers, amines or amides as well as phosphorous-containing compounds and nitrogen. The catalyst system for the polymerization of alpha-olefins employing the prepolymerized titanium trichloride catalyst of the present invention is exceedingly active for the homopolymerization or copolymerization of alpha-olefins such as propylene, butene-1, 4-methylpentene-1, ethylene and the like and gives uniform polymer particles and a high degree of stereoregular polymers are used to polymerize propylene, for example, the catalytic activities are somewhat greater than about 2,200 grams of polymer formed per gram of titanium trichloride having at least 95% heptane insolubles content.

By so encapsulating the reduced solids particles in a polymer matrix the particles are strengthened to resist mechanical attrition, to resist particle breakup to fines when subjected to solvents and to resist particle breakup to fines during the activation step. Unexpectedly, the prepolymerization, performed in accordance with this invention does not cause agglomeration of the catalyst particles but desirably allows the catalyst particles to retain their shape during activation and throughout any further polymerization reactions. These advantages are obtained even when the catalysts are employed in harsh solvents such as toluene.

The invention will be more clearly understood by reference to the following example. These examples illustrate specific embodiments of the present invention.

Example 1 - Preparation of the Titanium Halide Reduced Solid

This Example is illustrative of methods for preparing the reduced solids.

To a 500 ml flask equipped with a stirrer and placed in a thermostat-controlled bath at 0° there was placed 151.2 ml of 60 wt.% titanium tetrachloride in purified hexane. To the stirred mixture (200 rpm) was added dropwise over a period of 4 hrs. 134 ml of a mixture of 99.2 ml of diethylaluminum chloride, 38.09 grams of ethylaluminum dichloride and 136.7 ml of purified hexane. The reaction mixture was kept at 10°C under constant stirring for a period of 4 hours and then the temperature was increased incrementally over 1 hour to about 65°C; the reaction mixture was then aged for 1 hour at a temperature of 65°C, then cooled to 38°C for prepolymerization. Two runs were made.

Example 2 - Prepolymerization of the Slurried Titanium Trichloride Reduced Solid

To each of two 500 ml flasks equipped with a stirrer and containing the reduced solids slurry from Example 1 was added 96 cc purified hexane. The flasks were inserted in a water bath maintained at a temperature of 38°C with stirring at 200 rpm. The flasks were nitrogen purged and thereafter purged with ethylene or propylene respectively. Ethylene or propylene was then passed through the constantly stirred slurry for a time sufficient to provide 5-10 wt.% of polyethylene or polypropylene based on the weight of $TiCl_3$ present and the flasks were purged with nitrogen. Upon completion of the prepolymerization the catalyst, i.e., prepolymerized reduced solids were examined on an optical microscope and by X-ray diffraction techniques. The X-ray diffraction study revealed no change in the crystalline structure of the $TiCl_3$ reduced solids and the solids when subjected to mechanical shearing such as with a glass slide did not fracture, i.e., were non-friable.

Two runs were carried out, one using ethylene and one using propylene. The ethylene run was carried out in 37 minutes and the propylene run was carried out in 55 minutes: 7.6 gm of ethylene was fed during this time and 7.6 gm of propylene was fed during the propylene run. The feed rates of the ethylene and propylene were determined by visual observation of an exit bubble glass such that no gas left the flask. The prepolymerized solids were washed with hexane over a filter and dried.

Example 3 - Activation of the Prepolymerized TiCl₃ Reduced Solids

The following illustrates that the prepolymerized titanium trichloride reduced solids can be activated to a highly crystalline purple type titanium trichloride.

Method A

To a 250 ml glass bottle there was added 10 gm of prepolymerized reduced solid as prepared in accordance with Example 2. To the bottle was added 16.3 ml of nonane as solvent. This slurry was heated to 65°C and 24 ml of activator solution consisting of 48 millimoles of di-n-butyl ether (DNBE) and 33 millimoles of hexachloroethane in nonane was added to the reduced solids slurry in time intervals of one minute. The temperature was then increased to 85°C in 15 minutes and held at that temperature for 5 hours. The catalyst turned purple.

The catalyst particles were separated from the solvent and washed with boiling hexane. Upon examination under the microscope and X-ray diffraction, the catalyst was noted to be crystalline and resistant to mechanical shearing forces. Catalyst fines were absent.

Method B

To a 250 ml glass bottle there was added 10 gm of prepolymerized reduced solids. To the bottle was added 16.3 ml of nonane as solvent. This slurry was heated to 85°C and 24 ml of an activator solution consisting of 48 millimoles of DNBE and 33 millimoles of hexachloroethane in nonane was added over a time interval of about 1 minute. The temperature was then held at 85°C for 5 hours. The catalyst turned purple.

The catalyst particles were separated from the solvent and washed with boiling hexane. Upon examination under the microscope and X-ray diffraction the catalyst was noted to be crystalline and resistant to mechanical shearing forces. Catalyst fines were absent.

Example 4

The following runs illustrate that the ethylene prepolymerized activated $TiCl_3$ reduced solids catalyst component is an improved catalyst component as compared with propylene activated $TiCl_3$ catalyst component which has not been prepolymerized in accordance with this invention.

.17 gm of the titanium trichloride catalyst component prepared according to Example 3 and diethylaluminum chloride in a proportion of 5 mols to 1 gm atom of titanium were charged into a 1000 ml autoclave for each run. $8.5 \times 10^{-2}$ gram moles of hydrogen and 800 ml of liquid propylene were introduced into the autoclave. The contents were heated to 68°C and allowed to react for a period of 30 minutes. The unreacted propylene was removed and the separated polymer was washed.

Results of this Example and the comparisons are summarized in Table I (ethylene prepolymerization) and Table II (propylene prepolymerization).

## TABLE I
### ETHYLENE PREPOLYMERIZATION

| RUN | 1 | 2 | 3 | 4 |
|---|---|---|---|---|
| CATALYST ACTIVATION | METHOD A | | METHOD B | |
| CATALYST EFFICIENCY 300,000/Ti(ppm) | 2158 | 2143 | 2459 | 2400 |
| Al/Ti MOLAR RATIO 1.78 Al(ppm)/Ti(ppm) | 5.7 | 6.1 | 5.8 | 5.5 |
| HEPTANE INSOLUBILITY (Wt.%) | 96.5 | 96.0 | | 94.3 |
| ETHER SOLUBILITY (Wt.%) | 0.84 | 0.98 | | 2.05 |
| MELT FLOW RATE (dg/min) PELLETS | 6.7 | 13.6 | 8.2 | 6.0 |
| BULK DENSITY (g/cm$^3$) | 0.387 | 0.376 | 0.454 | 0.452 |
| POWDER FLOW TIME(sec) | No flow | No flow | 8.0 | 8.3 |
| AVERAGE PARTICLE SIZE (microns) | 688 | 690 | 531 | 541 |
| COV* - 1/2 in (dia 84%/dia 16%) | 0.73 | 0.77 | 0.18 | 0.19 |

PARTICLE SIZE DISTRIBUTION:
Wt.% finer than size indicated

| Mesh | Microns | | | | |
|---|---|---|---|---|---|
| 10 | 2000 | 84.98 | 82.61 | 99.99 | 99,57 |
| 14 | 1410 | 77.35 | 75.48 | 99.96 | 99.34 |
| 18 | 1000 | 67.45 | 66.25 | 99.92 | 99.19 |
| 25 | 707 | 53.46 | 52.78 | 99.25 | 98.36 |
| 35 | 500 | 20.63 | 18.93 | 28.77 | 27.70 |
| 45 | 354 | 7.80 | 7.40 | 7.86 | 8.57 |
| 60 | 250 | 3.86 | 3.47 | 1.27 | 1.27 |
| 80 | 177 | 2.40 | 1.97 | 0.07 | 0.15 |
| 120 | 125 | 1.65 | 1.20 | 0 | 0.02 |
| 170 | 88 | 1.02 | 0.58 | 0 | 0 |
| 230 | 63 | 0.57 | 0.30 | 0 | 0 |

* Coefficient of variance

TABLE II

PROPYLENE PREPOLYMERIZATION

| RUN | 5 | 6 | 7 | 8 |
|---|---|---|---|---|
| | METHOD A | | METHOD B | |
| CATALYST EFFICIENCY 300,000/Ti (ppm) | 2113 | 2273 | 2778 | 2439 |
| Al/Ti MOLAR RATIO 1.78 Al(ppm)/Ti(ppm) | 8.0 | 7.8 | 4.5 | 4.82 |
| HEPTANE INSOLUBILITY (Wt.%) | 96.5 | 96.8 | 95.7 | 95.6 |
| ETHER SOLUBILITY (Wt.%) | 1.05 | 0.99 | 1.41 | 1.54 |
| MELT FLOW RATE (dg/min) PELLETS | 6.7 | 5.6 | 6.7 | 9.3 |
| BULK DENSITY ($g/cm^3$) | | | 0.45 | 0.42 |
| POWDER FLOW TIME(sec) | | | 8.0 | 8.0 |
| AVERAGE PARTICLE SIZE (microns) | | | 540 | 548 |
| COV - 1/2 in (dia 84%/dia 16%) | | | 0.13 | 0.13 |

PARTICLE SIZE DISTRIBUTION: Wt.% finer than size indicated

Too clumped to sieve

| Mesh | Microns | 7 | 8 |
|---|---|---|---|
| 10 | 2000 | 100.00 | 99.88 |
| 14 | 1410 | 99.99 | 99.81 |
| 18 | 1000 | 99.98 | 99.71 |
| 25 | 707 | 99.76 | 99.37 |
| 35 | 500 | 19.17 | 19.99 |
| 45 | 354 | 6.78 | 4.15 |
| 60 | 250 | 2.14 | 0.96 |
| 80 | 177 | 0.34 | 0.09 |
| 120 | 125 | 0.02 | 0.04 |
| 170 | 88 | 0 | 0.01 |
| 230 | 63 | 0 | 0 |

CLAIMS

1.  A non-friable, highly active Ziegler-type $TiCl_3$ catalyst composition characterized in that it is obtained by:

(1) contacting $TiCl_4$ with an organoaluminum compound at a temperature in the range of $-50^{\circ}C$ to $30^{\circ}C$ to produce a $TiCl_3$ reduced solid product,

(2) contacting the reduced solid $TiCl_3$ product with an amount of ethylene under polymerization conditions to obtain a reduced $TiCl_3$ solid product containing 1 to 1,000 wt.% of prepolymerized ethylene based on the weight of $TiCl_3$,

(3) treating said prepolymerized reduced solid with one of (a) a chlorinated hydrocarbon having at least 2 carbon atoms and a Lewis base complexing agent or (b) $TiCl_4$ and a Lewis base complexing agent to convert the prepolymerized $TiCl_3$ reduced solid to a substantially non-friable highly active, crystalline prepolymerized $TiCl_3$ composition.

2.  A $TiCl_3$ catalyst composition according to claim 1, in which the prepolymerized $TiCl_3$ reduced solid is treated with the chlorinated hydrocarbon and Lewis base complexing agent at a temperature of from $50^{\circ}C$ to $100^{\circ}C$ for from 1 to 10 hours, the chlorinated hydrocarbon being present in an amount at least 0.2 mol per gram atom of titanium and the Lewis base being present in an amount of at least 0.1 mol per mol of titanium.

3.  A $TiCl_3$ catalyst composition according to claim 2, in which the halogenated hydrocarbon is present in an amount of 0.5 mol to 1.5 mol per gram atom of titanium in the prepolymerized reduced solid and the Lewis base is present in a range of 0.1 mol to 2.5 mols per mol of titanium.

- 27 -                                    0068799

4.  A TiCl$_3$ catalyst composition according to any of claims 1 to 3 in which the organoaluminum compound is of the general formula R$_n$AlX$_{3-n}$ wherein R is an alkyl group having from 1 to 18 carbon atoms, X is a halogen and n is an integer of from 1 to 3.

5.  A TiCl$_3$ catalyst composition according to claim 4, in which the organoaluminum compound is a mixture of diethyl aluminum chloride and ethyl aluminum dichloride.

6.  A TiCl$_3$ catalyst composition according to any of claims 1 - 5, in which the organoaluminum compound is present in a ratio of from 0.5 to 5 gm atoms of aluminum to 1 gm atom of titanium.

7.  A TiCl$_3$ catalyst composition according to any of claims 1 to 6, in which the prepolymerized TiCl$_3$ reduced solid product is filtered and washed in the presence of a liquid hydrocarbon.

8.  A TiCl$_3$ catalyst composition according to any of claims 1 to 7, in which the Lewis base complexing agent is selected from the group consisting of di-n-butyl ether, di-n-amyl ether, diisoamyl ether, di-n-heptyl ether, di-2-ethyl hexyl ether, n-butyl isoamyl ether or mixtures thereof.

9.  A TiCl$_3$ catalyst composition according to any of claims 1 to 8, in which the chlorinated hydrocarbon is hexachloroethane.

10.  A TiCl$_3$ catalyst composition according to claims 2 and 6, in which the TiCl$_4$ is mixed with said organoaluminum compound for a period of from 30 minutes to 3 hours and said prepolymerized reduced solid TiCl$_3$ is contacted with the chlorinated hydrocarbon in a ratio of 0.2 to 3.0 mols chlorinated hydrocarbon per 1 gm atom of said TiCl$_3$ and with said complexing agent in a ratio of 0.1 to 2.5 mols complexing agent per 1 gm atom of said TiCl$_3$.

11. A catalyst composition according to any of claims 1 - 10, in which in step 1

(a)   said organoaluminum compound is added with stirring to said $TiCl_4$ in solution in a suitable diluent at a temperature of from -50°C to +10°C and in a mole ratio of from 1:3 to 1.2:1 and at a rate such that the reduction of $TiCl_4$ to $TiCl_3$ is from 0.03 to 0.2 m moles per liter per second to obtain $TiCl_3$ solids product in the diluent having a narrow particle size distribution and an average particle size greater than 20 microns;

(b)   continuously and simultaneously adding with stirring to the $TiCl_3$ solids product in the diluent an organoaluminum reducing compound and $TiCl_4$ in a mole ratio of from 1:3 to 1.2:1, the simultaneous addition being made at a rate such that the reduction of $TiCl_4$ to $TiCl_3$ is from $6 \times 10^{-4}$ to 0.02 m moles per liter per second per $m^2$ of available preformed $TiCl_3$ surface area until solids product of desired size are obtained.

12.   The catalyst composition according to claim 11, in which the rate of stirring provides a stirring power of from 3.0 to 2600 milliwatts per liter.

13.   The catalyst composition according to claim 11 or 12 in which step (a) is followed by step (b) without interruption.

14. The catalyst composition according to any of claims 11 to 13, where in step (a) the total moles or organoaluminum compound to $TiCl_4$ is from 0.1:1.0 to 1.2:1.0 and the organo-aluminum compound being a mixture of diethylaluminum chloride (DEAC) and ethylaluminum dichloride (EADC) with from 0 to 1.0 mole of added EADC per mole of DEAC, a part of the added EADC optionally being in solution with titanium tetrachloride prior to the addition to DEAC and the remainder of the added EADC being added with DEAC to the $TiCl_4$ solution, and in step (b) said organoaluminum compound being DEAC or mixtures thereof with EADC and $TiCl_3$ at a mole ratio based on total moles of

0068799

organoaluminum compound per mole of $TiCl_4$ of about 0.9:1.0 to about 1.2:1.0.

15. A process for the polymerization of x-olefins wherein an x-olefin is contacted with a Ziegler-type catalyst comprising an organo metallic compound and a catalyst composiion according to any of the preceding claims.